# EUROPEAN PATENT SPECIFICATION

(11) **EP 1 023 551 B1**
(45) Date of publication and mention of the grant of the patent: **02.07.2003**
(21) Application number: 97909757.3
(22) Date of filing: 29.10.1997
(51) Int. Cl.: F16L 1/16, B63B 21/66

(54) **DEVICE FOR APPLYING AN UPWARD FORCE TO A BODY AND METHOD OF TOWING A BODY**
VORRICHTUNG ZUM AUFBRINGEN EINER NACH OBEN GERICHTETEN KRAFT UND VERFAHREN ZUM ZIEHEN EINES KÖRPERS
DISPOSITIF PERMETTANT D'APPLIQUER UNE FORCE ASCENDANTE A UN CORPS ET PROCEDE PERMETTANT DE TRACTER CE CORPS

(30) Priority: 19.09.1997 NL 1007075
(43) Date of publication of application: 02.08.2000
(73) Proprietor: Clyde Petroleum Exploratie B.V., 2514 HD Den Haag (NL)
(72) Inventor: KORNDÖRFER, Dieter, NL-3115 JA Schiedam (NL)
(74) Representative: Lips, Hendrik Jan George, Ir.
(86) International application number: NL9700591
(87) International publication number: WO99015824

(56) References cited:
- EP-A- 0 069 446
- FR-A- 1 318 603
- US-A- 3 673 556
- US-A- 4 789 269
- US-A- 4 887 931

## Description

The invention relates to a device for exerting an upward force to a submerged pipeline, said device having one or more coupling members by which the device can be coupled to said pipeline, a floating member for adjusting the floating power of the device, and an adjustable wing structure.

Such a device is known from US-A-4,789,269. This known device is relatively small and in order to give enough lift force to a pipeline a large number of these known devices spaced at closed intervals is needed. The device according to the invention is designed to give a far greater lift force as a result of which only a relatively small number of these devices is needed to exert sufficient lift force on a submerged pipeline. The aim of the invention is to provide a device with a far greater lift force that still can be handled easily when attaching or removing the device from a pipeline.

Accordingly, according to the invention it is provided for, that the floating member, consisting of one or more parts, is a separate floating member, the said wing structure being connected to the floating member and that said wing structure comprises a wing supporting frame with wing canvas fixed to it, means having been provided for keeping parts of the wing in a non-operating position or an operating position.

By being able to put the wing in a non-operating position the effective surface area of the wing is greatly reduced as a result of which the wing component in the total lifting force of the device becomes neglectable small.

With the floating member, the floating power of the device can be adjusted such, that the collective floating power of the device and the part of the pipeline engaged by the device at the relevant depth of the bottom is a predetermined degree smaller than the weight of the device and the part of the pipeline engaged by the device. The wing structure provides for that already at some speed of the assembly of pipeline and devices in relation to the water of sea-water the total floating power is large enough to be able to pull the pipeline loose from the bottom.

This has the great advantage that the pipeline will only come loose from the bottom of the sea at the moment when towing is started and that the pipeline at the place of destination can simply be sunk by removing the speed in relation to the seawater. Furthermore, a further advantage is that e.g. with changing weather conditions during towing the pipeline can be brought to a safer depth by simply reducing the towing speed.

The canvas or the like is mounted in such a way to the wing supporting frame that a delta wing is formed when the wing is positioned in the operating position. This has the advantage that a very stable wing is formed and moreover that therewith the wing is very well controllable.

A further elaboration of the invention provides for that the floating member is provided with an inlet and an outlet, intended for feeding a medium of a first density and discharging a medium of a second density, respectively, the density of said second medium being larger than the density of said first medium, and said second medium being displaced by said first medium.

Since the device should be coupled to a body being situated under water, it is important that the floating power of the device is so small, that said device can be easily sunk and be brought into the proper position in relation to the body, before the desired floating power at rest is adjusted. According to a further development, the floating member or floating members are filled with (sea)water before being sunk, and once the device is coupled to the body, the water is expelled by compressed air.

A preferred embodiment of the device according to the invention has a wing supporting frame with a central shaft pivotally mounted in longitudinal direction on top of said floating member, with swinging arms being attached at both sides near an outer end of the central shaft, in which extending arms consisting of one or more parts are provided for bringing the swinging arms from a non-operating position to an operating position and back, said arms engaging the swinging arms at one outer end and engaging a sliding member movable across the central shaft at the other outer end, and locking means being provided for locking the extension arms in predetermined positions on the central shaft.

This construction of the device has the advantage that the device with the wing occupies a relatively small space in a non-operating position, as a consequence of which a large number of such devices can be taken along in one transport, e.g. in the hold and on the deck of a ship. Further, the pivoting wing makes it considerably easier to manoeuvre the device into position under water, since no upward force exerted by the wing as a consequence of flow or advancement need be compensated.

The central shaft of the wing structure is pivotally mounted, so that the wing can be aligned independently of the position of the floating member of the device, which is coupled to the pipeline to be transported. In this way, the wings of a series of successive devices coupled to a pipeline can take up an identical position, and the upward forces on the several locations are exerted in corresponding directions.

A second embodiment of the device according to the invention is characterized in that the wing supporting frame comprises a ring rotatable around the floating member, a substantially U-shaped portion longitudinally extending across at least a part of the floating member and having its outer ends connected to the rotatable ring and having a pivoting connection with the rear side of said floating member, with swinging arms being mounted near the outer ends of the legs of the U-shaped portion, and in which extending arms consisting of one or more parts have been provided for bringing the swinging arms from a non-operating position to an operating position and back, said extending arms at one end engaging the swinging arms and at the other end engaging a sliding member movable across a leg of the U-shaped portion, locking means being provided for locking the extending arms on predetermined positions on a leg of the U-shaped portion.

With this embodiment, the wing is divided into two halves situated next to the floating member or floating members, whereby it is prevented that due to a floating member being situated under it, a part of the wing surface may not contribute to the upward force to be supplied by the wing. This embodiment is especially meant for those situations in which the floating members should supply a relatively large upward force and also have a considerable surface.

Here, the wing can change its position in relation to the floating member or floating members, to wit by means of the mounted rotatable ring. Since especially with such a larger embodiment, it can be important to be able to adjust the upward force to be realized exactly, considering the ultimate transport speed in relation to the water, according to another elaboration it has been provided for, that the U-shaped portion is pivotally connected to the rotatable ring, and that the rotatable connection of the U-shaped portion can be adjusted relative to the rear side of the floating member in such a way, that the U-shaped portion can take up various angular positions in relation to the plane in which the rotatable ring is situated.

Basically, such a measure can be applied with the first embodiment as well; however, we chose a design as economically as possible, which can be used within a predetermined range, and in which additional adjusting possibilities were therefore left out.

The device is meant to be positioned straight above the pipeline to transported and subsequently be coupled to it. In order to be able to take up the correct position in relation to the pipeline and the bottom (of the sea), the device is provided with a supporting frame connected to one or more floating members and standing on at least two parallel sliding legs, that enclose a sharp angle in relation to the central shaft or the U-shaped portion of the wing supporting frame, in which further at least two clamping members situated between the sliding legs and spaced apart have been provided, their points of application being at the same height in relation to the sliding legs.

In order to move a device according to the invention from e.g. a ship's deck into the vicinity of the pipeline to be transported, a mounting frame has been provided, which is meant to be coupled to the device at one side, and that has fastening points at the other side for being connected to the cables of a crane or winch, by which mounting frame and device can be brought to the desired depth.

The mounting frame is further provided with at least three coupling members, which are meant to cooperate with complementary coupling members on the device, a pipe and/or cable work system having at least connecting points for which complementary connecting points have been mounted on the device, at least one hydraulic cylinder having one end meant to engage (or engage in the vicinity of) an outer end or ends of the extending arms and locking means for them mounted on the device.

For accurately positioning, coupling and adjusting the device, after the device has been brought to a predetermined distance over the bottom (of the sea) at the mounting frame, a preferably remotely controlled instrument is employed. Such an instrument is provided with propelling and control means and can be coupled to the mounting frame, in such a way that they take up a fixed position in relation to each other, and in which the piping and cable work system of the mounting frame is coupled to that of the instrument, or directly to a piping and cable work system of the control system onboard the ship from where mounting takes place.

After the controllable instrument has been coupled to mounting frame and device, with the help of the controllable instrument the device is positioned across the pipeline, the clamping members are brought around the pipeline, the liquid medium present in the floating member is completely or partly displaced, the wing supporting frame is brought into operative position by the hydraulic cylinder on the mounting frame, the coupling of the mounting frame to the device is unlocked, and the controllable instrument is uncoupled from the mounting frame at the predetermined height.

In most cases, the pipeline will have been concealed in the bottom (of the sea) in order to make the pipeline heavier and/or to prevent the pipeline from getting damaged by towing nets used in fishing, and prevent the towing nets from getting damaged by the pipeline. Clearing the pipeline in e.g. the area of the North Sea takes place by blowing away the sand lying on and immediately near the pipeline. The cleared parts of the bottom immediately next to the pipeline will not always be situated in a horizontal plane, as a consequence of which the device, which will come to bear on said non-horizontal plane with its sliding legs, will enclose a small angle with the vertical. This is no problem, since the wing is able to tilt in relation to the device. Due to the engagement of the two spaced apart clamping members of the device on the device, the position of the device as a whole in relation to the longitudinal direction of the pipeline will always correspond to the predetermined angle.

The invention further provides for a method of transporting a length of pipeline. Preceding the transport, the length of pipeline to be transported is uncoupled, closed off at the ends and partly or completely emptied, whereupon the devices are mounted at predetermined distances and are adjusted. The mutual distance between the devices is determined by, among other things, the total upward force to be produced by each of the devices, stiffness and weight of the pipeline and the resistance of pipeline and the devices coupled to it, that can be expected during transport in the water.

For transport, tugs are coupled at least to the ends of the length of pipeline, the control of the tugs being arranged such, that the forces engaging the pipeline are distributed as uniformly as possible. To that end, according to the invention it has been provided for, that for arranging the control of the tugs, signals are generated by signalling members mounted at least on each of the devices, said signals indicating the absolute position or the position in relation to a certain point of at least the individual devices, said signals being received and processed by a signal processing unit being situated at a distance from the length of pipeline being town, or moving along with it, and the signal processing unit sends out the control signals intended for the tugs.

Since the pipelines to be transported can have a length of many kilometres, it is very important that except for the horizontal position, the vertical position of each of the devices is known as well, so that oscillations in the pipeline in all directions can be identified and the control can be adjusted to them. Obviously, this means that by changing weather conditions, the entity can be sunk to wait for more favourable conditions, or that e.g. yet another one or more tugs can be coupled to the pipeline along its length.

Besides for transporting large lengths of pipeline, the device according to the invention can also be used for releasing other objects from the bottom of the sea and transporting them through the water. Here, one can think of e.g. wrecked ships, for which one or more devices should be coupled to the object, depending on its size.

In the following, the invention is further explained by means of the drawing, in which:
Fig. 1 shows a first embodiment of the device as well as a mounting frame and a remotely controlled instrument;
Fig. 2A shows schematically a plan view of a first embodiment of the device;
Fig. 2B shows schematically a front view of a first embodiment of the device;
Fig. 2C shows schematically a lateral view of a first embodiment of the device;
Fig. 3 shows a front view of the device according to Fig. 1, with the wing in a non-operating position;
Fig. 4 shows a front view according to Fig. 3, with the wing having been brought into the operating position;
Fig. 5 shows a second embodiment of the device as well as a mounting frame;
Fig. 6 shows schematically a plan view of the second embodiment; and
Fig. 7A, B, C, D, E show successive stages of positioning and adjusting a device according to the invention.

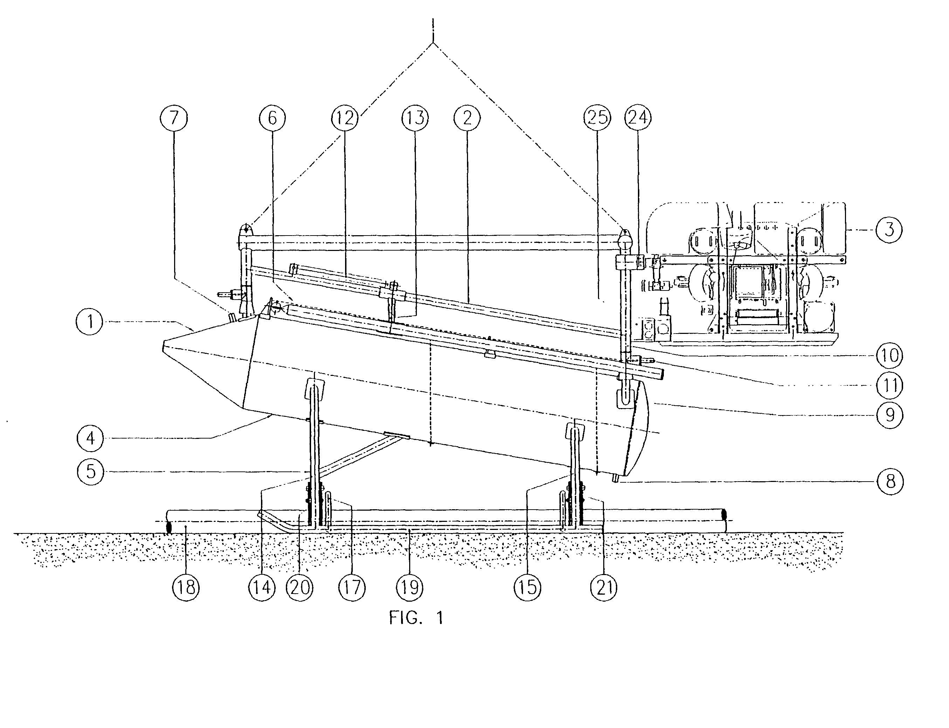

In fig. 1, a first embodiment of the device is indicated by 1, the mounting frame by 2 and the instrument required for precise positioning and adjustment of the device by 3. The device 1 has a floating member 4 being provided with a supporting frame 5 and a wing structure 6.

The floating member 4 is provided with an inlet 7 and an outlet 8, said inlet being connected to a compressed air connection of the mounting frame 2 in a way not further indicated. Preferably, the inlet 7 is a hydraulically operated valve which is normally in closed position. The outlet 8 can be executed simply as a pressure-relief valve.

At the top side of the floating member 4, a number of pins 9 have been mounted, in the given example three, which are intended for cooperation with the legs 10 of the mounting frame 2. The legs 10 extend conically at their ends, as a consequence of which the mounting frame can be positioned on the device more easily. Hydraulically operated locking members 11 are mounted on the legs 10, said members preferably having a protrusion for falling into holes or recessions mounted in the pins 9.

The mounting frame is further provided with a hydraulic cylinder 12, which, in case of a mounting frame fixed to the device, engages an operating member 13 by which the wing structure 6 can be brought from a non-operating position to an operating position.

The supporting frame 5 is provided with two pairs of legs 14, 15, with connections 16 with an arched portion 17 being mounted between each pair of legs. The arched portions 17 are intended to fall across a pipeline 18 to be transported, which facilitates positioning the device in relation to pipeline. Further, the pairs of legs 14, 15 are connected to each other by sliding legs 19 at both sides of the arched portions 17. The front ends of the sliding legs protrude slightly upwards in order to prevent them from becoming stuck in the bottom at the beginning of transport of a length of pipeline.

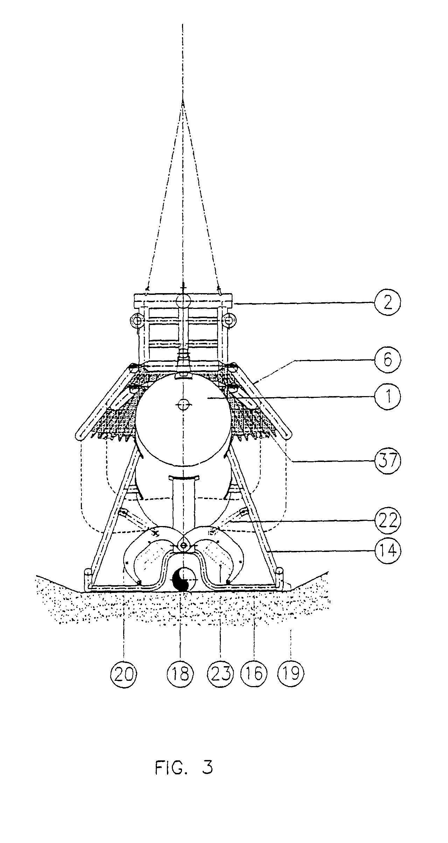

Between the legs of the pairs 14, 15, clamping members 20, 21 have been mounted, by which the pipeline can be clamped. The clamping members can be operated by hydraulic cylinders 22 (see Fig. 3). Preferably, the clamping members 20, 21 have their insides provided with elastic pads 23 that can be made of rubber or a plastic and can be provided with more or less elastic compartments or air chambers.

Such pads serve to prevent damage to the pipeline and possible secondary pipes. Although possible secondary pipes having a much smaller diameter than the main pipe are mostly mounted on top of the main pipe, they can end up at the side of the main pipe due to rotation of the main pipe, or the secondary pipe coming loose from the main pipe.

The device is provided with pipes - not further indicated in the drawing - for hydraulically operating the cylinders 22 for the clamping members 20, 21, the inlet 7 and possibly outlet 8, and a compressed air duct connecting to the inlet 7. When positioning the mounting frame 2 onto the device 1, these pipes connect to a pipe system of the mounting frame 2. Connection can take place through a quick-action coupling system, for example, in which hydraulical means for coupling and uncoupling are situated on the mounting frame.

The pipe system of the mounting frame can have a direct connection to the ship from where the mounting is arranged. However, it is preferred to use a remotely controlled instrument 3, which is kept at depth near the pipeline during subsequent mounting of a number of devices, and to connect the pipes to the mounting ship through said instrument.

For this purpose, a second coupling system 24 is mounted serving for coupling the pipes of the mounting frame 2 to the corresponding pipes of the instrument 3. The lines for hydraulically operating the cylinder 12 and the locking members 11 mounted on the mounting frame connect to said coupling system 24 as well.

Apart from the pipe coupling system, the mounting frame is further provided with a mechanical coupling 25, by which mounting frame 2 and instrument 3 can be secured in relation to each other.

Besides hydraulical and compressed air lines, possibly a cable system can be provided for temporarily connecting electrical instruments mounted on the device to the mounting ship.

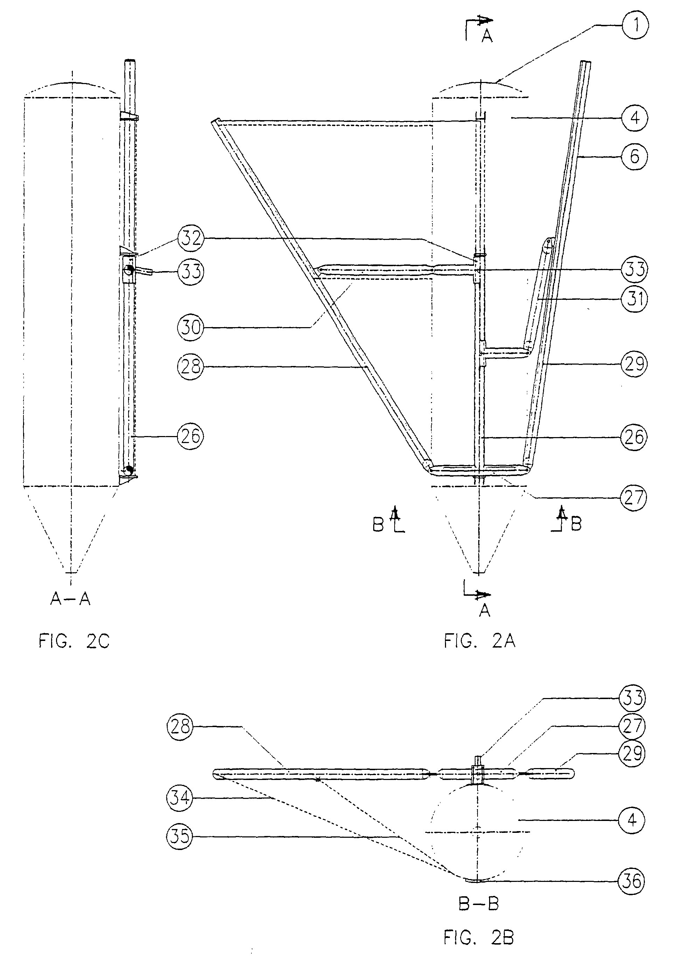

Fig. 2A shows a plan view of the device with the various parts of the wing structure 6. The structure has a central pipe being rotatably mounted around the longitudinal axis on the driving member 4. At the front end, a cross-piece 27 has been mounted, to which the pivoting arms 28, 29 have been fastened. The pivoting arms 28, 29 are further connected to expanding arms 30, 31, and the expanding arms 30, 31 are in turn connected to a sliding member 32 slidable across the central pipe 26.

The view according to Fig. 2B further shows stay ropes 34, 35 connecting the expanding arms 28, 29 to each other, and for which one or more guides 36 are mounted underneath the drive member. In this way, the pivoting arms 28, 29 and the central pipe 26 can always remain in one plane during load on the wing.

Fig. 2C shows the sliding member 32 slidable across the pipe 26. Said sliding member mounts a protruding portion 33 serving as point of engagement for a complementary portion at the outer end of the hydraulic cylinder 12 on the mounting frame 2. Further, the sliding member is provided with locking means for securing the sliding member 32 on the central pipe 26 in the two outer positions; the operating and the non-operating position. Said locking means can be controlled in a simple way by engagement or removal of the complementary portion of the hydraulic cylinder on the protruding portion 33 of the sliding member 32.

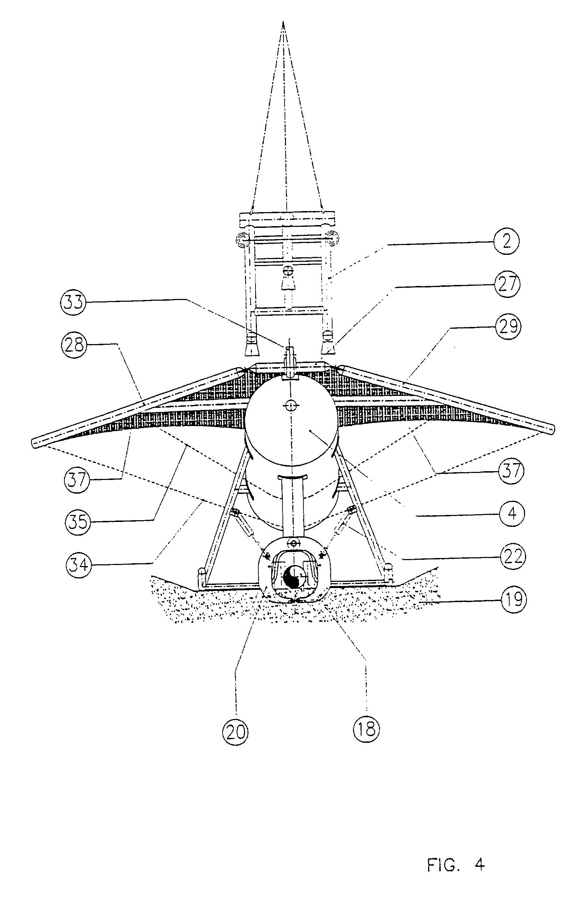

The canvas 37 (see Figs. 3, 4) carried by the wing structure 6 is fixed to the pivoting arms 28, 29 and the cross-piece 27. Further, the canvas is secured by two cables extending along the central pipe and a recession for the sliding member 32 with the protruding portion 33 is made between the cables.

The canvas 37 is mounted in such a way, that a delta wing is formed in the operating position. Due to this, one not only achieves a very stable wing, but also a very well controllable wing.

Figs. 3 and 4 show a device 1 with mounting frame 2, with the entity placed only across a pipe 18 in Fig. 3, and with the clamping members 20, 21 clamping the pipe 18 in Fig. 4, the wing having been brought in its operating position and the mounting frame having been uncoupled. Here, the water brought into the floating member preceding the mounting is completely or partly expelled by compressed air, which can occur after clamping the pipe to the device and before or after bringing the wing into its operating position.

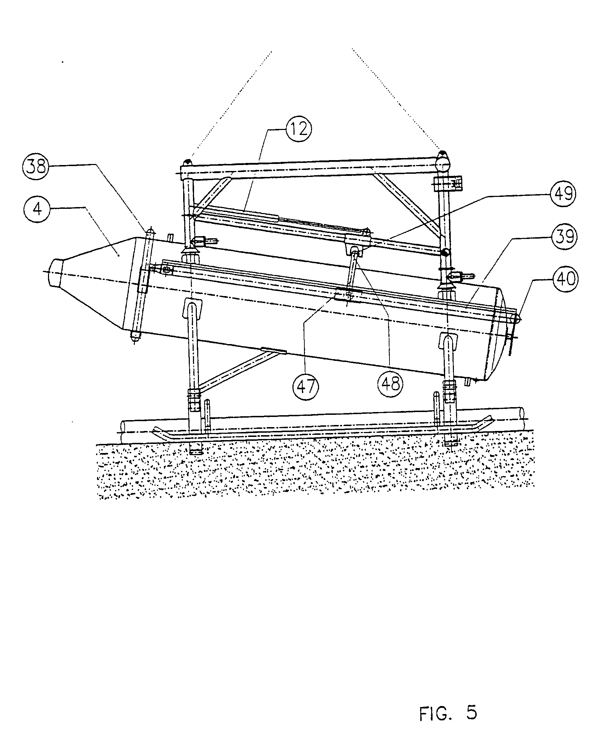

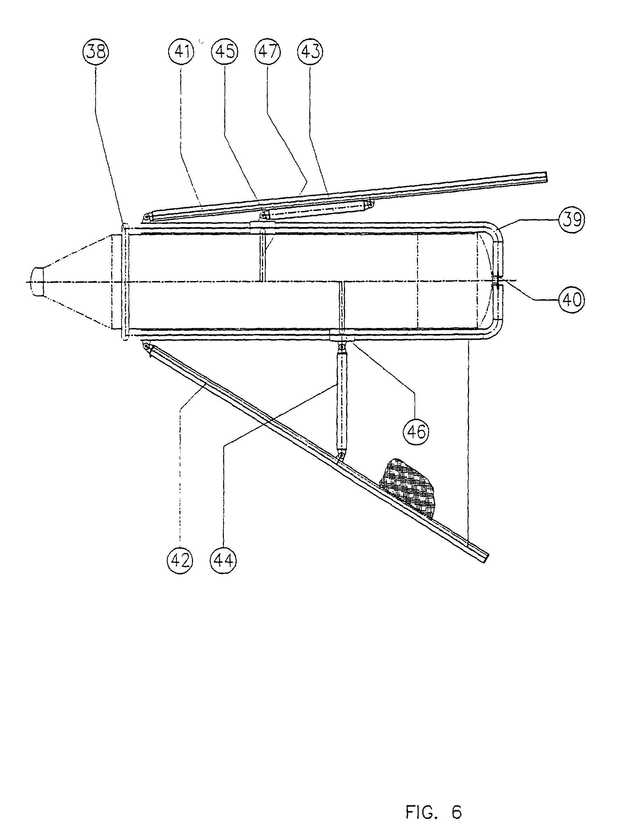

Figs. 5, 6 show a second embodiment of the device, distinguishing itself from the first embodiment by a wing structure having two wing parts mounted at both sides of the floating member.

The wing structure consists of a ring 38 rotatably mounted around the floating member 4, to which a U-shaped portion 39, extending around the portion of the drive member situated behind the rotatable ring, is pivotally connected. At its rear side, the U-shaped portion 39 is connected to the drive member through a adjustable connecting part 40, by which it is possible to adjust the angle of the wing to the horizontal.

Pivoting arms 41, 42 are mounted at the outer ends of the U-shaped portion 39, near the rotatable ring 38. With. the help of expanding arms 43, 44 and sliding members 45, 46 mounted on the U-shaped portion, the pivoting arms can be brought into the operating or the non-operating position. The sliding members 45, 46 are mutually connected to a connecting part 47 which is provided with a protruding portion 48 which is meant to cooperate with a complementary part 49 fixed to the hydraulic cylinder 12 on the mounting frame.

Although not indicated in the drawing, in this embodiment too, the pivoting arms 41, 42 are connected to one or more of the stay ropes extending underneath the floating member.

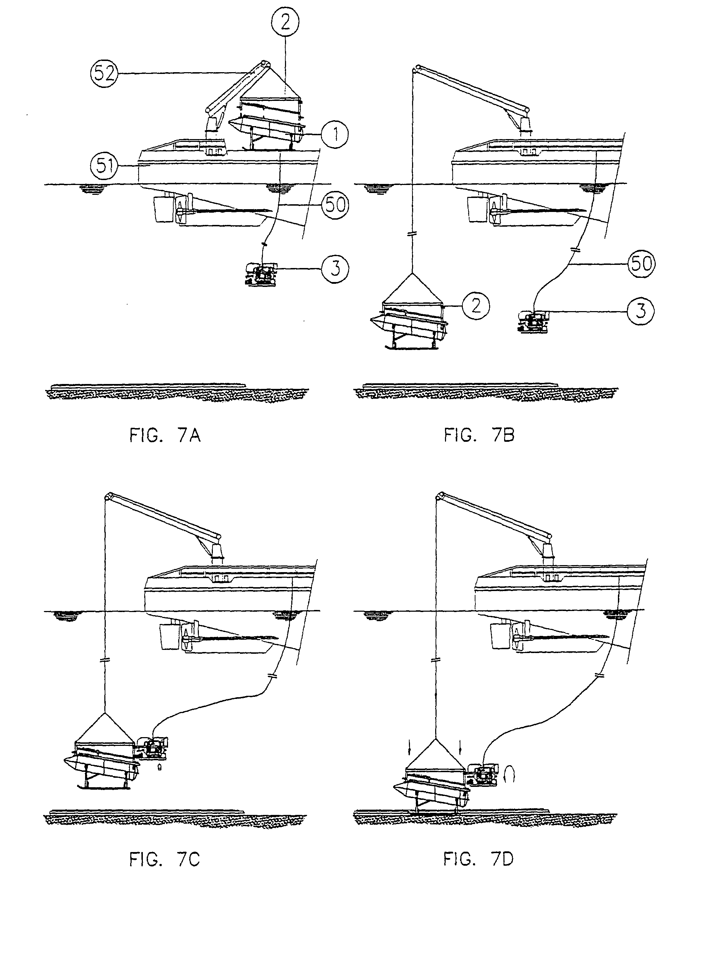

Figs. 7A through 7E show the successive stages of installing a device according to the invention.

Fig. 7A shows sinking a remotely controlled instrument to a desired depth from a ship 51. A line and cable supply system 50, necessary for controlling the instrument and for installing the device, is connected to the instrument. At the same time, a mounting frame 2 is coupled to a device 1 by a crane 52, whereupon said device is brought to a predetermined distance above the bottom of the sea (Fig. 7B) .

In Fig. 7C, the instrument 3 and the necessary pipes have been coupled to the mounting frame 2. Subsequently, the pipeline is traced with the help of the camera and sonar system on the instrument 3 and, using the propulsion means of the instrument 3, the device is placed across the pipeline 18 (Fig. 7D).

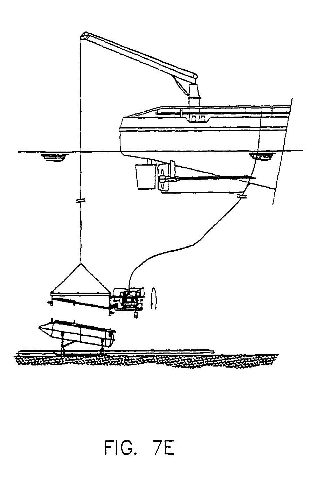

After the device 1 has been placed across the pipeline 18, successively the clamping members are clamped around the pipeline, the water is forced from the floating member and the wing is brought into the operating position. Subsequently, the mounting frame 2 with the instrument 3 are uncoupled from the device by disengaging the locking members 11, and the assembly is brought at a predetermined distance above the bottom of the sea with the help of the propulsion means of the instrument (Fig. 7E).

Finally, the instrument 3 is uncoupled from the mounting frame 2 and the mounting frame can be hauled up and be coupled to a next device. All further devices can be mounted in this way, in which the remote controlled instrument can always be kept in close proximity of the pipeline.

## Claims

1. Device (1) for exerting an upward force to a submerged pipeline, said device (1) having one or more coupling members (20,21) by which the device (1) can be coupled to said pipeline, a floating member (4) for adjusting the floating power of the device (1), and an adjustable wing structure (6), **characterized in that** the floating member (4), consisting of one or more parts, is a separate floating member (4), the said wing structure (6) being connected to the floating member (4) and that said wing structure (6)-comprises a wing supporting frame (26-32;38-47) with wing canvas (37) fixed to it, means (12,31-33;44-47) having been provided for keeping parts of the wing (6) in a non-operating position or an operating position.

2. Device according to claim 1, **characterized in that** said floating member (4) being provided with an inlet (7) and an outlet (8), intended for feeding a medium of a first density and discharging a medium of a second density, respectively, the density of said second medium being larger than the density of said first medium, and said second medium being displaced by said first medium.

3. Device according to claim 1-2, **characterized in that** said wing supporting frame (26-32) has a central shaft (26) pivotally mounted in longitudinal direction on top of said floating member (4), with swinging arms (28,29) being attached at both sides near an outer end of the central shaft (26), in which extending arms (30,31) consisting of one or more parts are provided for bringing the swinging arms (28,29) from a non-operating position to an operating position and back, said arms (30,31) engaging the swinging arms (28,29) at one outer end and engaging a sliding member (32) movable across the central shaft at the other outer end, and locking means being provided for locking the extending arms (30,31) in predetermined positions on the central shaft (26).

4. Device according to claim 1-2, **characterized in that** the wing supporting frame (38-47) comprises a ring (38) rotatable around the floating member (4), a substantially U-shaped portion (39) longitudinally extending across at least a part of the floating member (4) and having its outer ends connected to the rotatable ring (38) and having a pivoting connection (40) with the rear side of said floating member (4), with swinging arms (41,42) being mounted near the outer ends of the legs of the U-shaped portion, and in which extending arms (43,44) consisting of one or more parts have been provided for bringing the swinging arms (41,42) from a non-operating position to an operating position and back, said extending arms (43,44) at one end engaging the swinging arms (41,42) and at the other end engaging a sliding member (45,46) movable across a leg of the U-shaped portion (39), locking means being provided for locking the extending arms (43,44) on predetermined positions on a leg of the U-shaped portion (39) .

5. Device according to claim 4, **characterized in that** the U-shaped portion (39) is pivotally connected to the rotatable ring (38), and that the rotatable connection (40) of the U-shaped portion (39) can be adjusted relative to the rear side of the floating member (4) in such a way, that the U-shaped portion (39) can take up various angular positions in relation to the plane in which the rotatable ring (38) is situated.

6. Device according to claims 1-5, **characterized in that** at the bottom side, the device is provided with a supporting frame (5) connected to one or more floating members (4) and standing on at least two parallel sliding legs (19), that enclose a sharp angle in relation to the central shaft (26) or the U-shaped portion (39) of the wing supporting frame (26-32;38-47), in which further at least two clamping members (20,21) situated between the sliding legs (19) and spaced apart have been provided, their points of application being at the same height in relation to the sliding legs (19).

7. Device according to claim 6, **characterized in that** the clamping members (20,21) consist of two identical parts, resilient rubber of plastic parts (23) being mounted at the inside.

8. Mounting frame (2) for a device according to one or more of the claims 1-7, **characterized in that** the frame (2) is provided with at least three coupling members (10), which are meant to cooperate with complementary coupling members (9) on the device, a pipe and/or cable work system having at least connecting points for which complementary connecting points have been mounted on the device, at least one hydraulic cylinder (12) having one end meant to engage an outer end or ends of the extending arms (30,31;43,44) and locking means for them mounted on the device.

9. Mounting frame according to claim 8, which is meant to be at least partly operated by a controllable instrument (2), **characterized in that** the mounting frame has coupling means complementary to coupling means mounted on the controllable instrument (3), by which instrument (3) and frame (2) can be coupled to each other in a fixed position, and in which the pipe and cable system have a common connecting point complementary to a common connecting point on the controllable instrument (3).

10. Method of mounting a device according to claims 1-7 of a length of pipeline lying on the bottom of the sea, using a mounting frame (2) according to claims 8-9 and a controllable instrument (3), **characterized in that** it comprises the following steps:
- coupling the mounting frame (2) to the device (1) and lowering the assembly to a predetermined height in relation to the bottom of the sea,
- coupling the controllable instrument (3) to the mounting frame (2) at a predetermined height;
- placing the device (1) across the pipeline with the help of the controllable instrument (3);
- have the clamping members (20,21) engage the pipeline;
- completely or partly displacing the liquid medium present in the floating member (4) by means of compressed air;
- driving the hydraulic cylinder (12) on the mounting frame (2) and bringing the wing supporting structure(26-32;38-47) into the operating position;
- unlocking the coupling of the mounting frame (2) to the device (1) ; and
- uncoupling the controllable instrument (3) from the mounting frame (2) at the predetermined height.

11. Method of transporting a length of pipeline situated on the bottom of the sea by a number of devices according to claims 1-7, **characterized in that** it comprises the following steps:
- closing off the length of pipeline at its outer ends and completely or partly emptying it;
- spacing the devices at predetermined mutual intervals on the pipeline and adjusting said devices;
- coupling the tugs to at least the outer ends of the length of pipeline; and
- arranging the control of the tugs.

12. Method according to claim 11, **characterized in that** for arranging the control of the tugs, signals are generated by signalling members mounted at least on each of the devices, said signals indicating the absolute position or the position in relation to a certain point of at least the individual devices, said signals being received and processed by a signal processing unit being situated at a distance from the length of pipeline being town, or moving along with it, and the signal processing unit sends out the control signals intended for the tugs.

## Patentansprüche

1. Vorrichtung (1) für das Ausüben einer aufwärtsgerichteten Kraft auf eine Unterwasserpipeline, wobei die Vorrichtung (1) ein oder mehrere Kopplungsglieder (20, 21), durch die die Vorrichtung (1) mit der Pipeline verbunden werden kann, ein Schwimmglied (4) für die Einstellung der Schwimm- bzw. Auftriebskraft der Vorrichtung (1) und eine einstellbare Flügelstruktur (6) hat, **dadurch gekennzeichnet, daß** das Schwimmglied (4), das aus einem oder mehreren Teilen besteht, ein getrenntes Schwimmglied (4) ist, wobei die Flügelstruktur (6) mit dem Schwimmglied (4) verbunden ist und die Flügelstruktur (6) einen flügeltragenden Rahmen (26-32; 38-47) aufweist, der Flügeltücher (37) hat, die an ihm befestigt sind, wobei eine Vorrichtung (12, 31-33; 44-47) zur Verfügung gestellt wird, um Teile des Flügels (6) in einer Nichtbetriebsposition oder einer Betriebsposition zu halten.

2. Vorrichtung nach Anspruch 1, **dadurch gekennzeichnet, daß** das Schwimmglied (4) mit einem Einlaß (7) und einem Auslaß (8) zur Verfügung gestellt wird, die für die Zuführung eines Mediums einer ersten Dichte bzw. für das Ablassen eines Mediums einer zweiten Dichte vorgesehen ist, wobei die Dichte des zweiten Mediums größer als die Dichte des ersten Mediums ist und das zweite Medium von dem ersten Medium verdrängt wird.

3. Vorrichtung nach Anspruch 1 oder 2, **dadurch gekennzeichnet, daß** der flügeltragende Rahmen (26-32) einen zentralen Schaft (26) hat, der in Längsrichtung oberhalb des Schwimmgliedes (4) schwenkbar montiert ist, mit Schwenkarmen (28, 29), die an beiden Seiten nahe eines äußeren Endes des zentralen Schaftes (26) befestigt sind, in denen ausfahrende Arme (30, 31), die aus einem oder mehreren Teilen bestehen, zur Verfügung gestellt werden, für das Bringen der Schwenkarme (28, 29) von einer Nichtbetriebsposition in eine Betriebsposition und zurück, wobei die Arme (30, 31) mit den Schwenkarmen (28, 29) an einem äußeren Ende in Eingriff treten und mit einem Gleit- bzw. Schiebeglied (32) in Eingriff treten, das an dem anderen äußeren Ende entlang des zentralen Schaftes bewegbar ist, und wobei eine Verriegelungseinrichtung zur Verfügung gestellt wird, für das Verriegeln der ausfahrenden Arme (30, 31) in vorbestimmten Positionen auf den zentralen Schaft (26).

4. Vorrichtung nach Anspruch 1 oder 2, **dadurch gekennzeichnet, daß** der flügeltragende Rahmen (38-47) aufweist: einen Ring (38), der um das Schwimmglied (4) drehbar ist, einen im wesentlichen U-förmigen Abschnitt (39), der sich in Längsrichtung über zumindest einen Teil des Schwimmgliedes (4) erstreckt und dessen äußere Enden mit dem rotierbaren Ring (38) verbunden sind und mit einer Schwenkverbindung (40) mit der Rückseite des Schwimmgliedes (4), mit Schwenkarmen (41, 42), die nahe der äußeren Enden der Schenkel des U-förmigen Abschnittes montiert sind und in denen ausfahrende Arme (43, 44), die aus einem oder mehreren Teilen bestehen, bereitgestellt werden für das Bringen der Schwenkarme (41, 42) von einer Nichtbetriebsposition in eine Betriebsposition und zurück, wobei die ausfahrenden Arme (43, 44) an einem Ende mit den Schwenkarmen (41, 42) in Eingriff treten und an dem anderen Ende mit einem Gleitglied (45, 46) in Eingriff treten, das entlang eines Schenkels des U-förmigen Abschnittes (39) bewegbar ist, wobei eine Verriegelungseinrichtung zur Verfügung gestellt wird für das Verriegeln der ausfahrenden Arme (43, 44) an vorbestimmten Positionen an einem Schenkel des U-förmigen Abschnittes (39).

5. Vorrichtung nach Anspruch 4, **dadurch gekennzeichnet, daß** der U-förmige Abschnitt (39) schwenkbar mit dem drehbaren Ring (38) verbunden ist und daß die drehbare Verbindung (40) des U-förmigen Abschnittes (39) relativ zu der Rückseite des Schwimmglieds (4) in der Weise eingestellt werden kann, daß der U-förmige Abschnitt (39) verschiedene Winkelpositionen in Bezug auf die Ebene, in der der drehbare Ring (38) gelegen ist, einnehmen kann.

6. Vorrichtung nach einem der Ansprüche 1 bis 5, **dadurch gekennzeichnet, daß** die Vorrichtung an der Unterseite mit einem Tragrahmen (5) ausgestattet ist, der mit einem oder mehreren Schwimmgliedern (4) verbunden ist und auf zumindest zwei parallelen Gleit- bzw. Verschiebungsbeinen (19) steht, die einen spitzen Winkel in Bezug auf den zentralen Schaft (26) oder in Bezug auf den U-förmigen Abschnitt (39) des flügeltragenden Rahmens (26-32; 38-47) einschließen, in dem weiterhin zumindest zwei voneinander beabstandet angeordnete Klemmglieder (20, 21) zwischen den Gleit- bzw. Schiebebeinen (19) zur Verfügung gestellt werden, wobei ihre Anlagepunkte in Bezug auf die Gleit- bzw. Schiebebeine (19) an derselben Höhe sind.

7. Vorrichtung nach Anspruch 6, **dadurch gekennzeichnet, daß** die Klemmglieder (20, 21) aus zwei identischen Teilen bestehen, an deren Innenseite elastischer Gummi oder plastische Teile (23) montiert sind.

8. Montagerahmen (2) für eine Vorrichtung nach einem oder mehreren der Ansprüche 1 bis 7, **dadurch gekennzeichnet, daß** der Rahmen (2) mit zumindest drei Kopplungsgliedern (10) ausgestattet ist, die dafür vorgesehen sind, mit komplementären Koppelgliedern (9) an der Vorrichtung zu kooperieren, wobei ein Rohr- und/oder Kabelarbeitssystem zumindest Verbindungspunkte hat, für die die komplementären Punkte an der Vorrichtung montiert sind, wobei zumindest ein Hydraulikzylinder (12) ein Ende hat, das dafür vorgesehen ist, mit einem äußeren Ende oder den äußeren Enden der ausfahrenden Arme (30, 31; 43, 44) in Eingriff zu treten, und eine Verriegelungseinrichtung für die ausfahrenden Arme hat, die an dem Gerät montiert sind.

9. Montagerahmen nach Anspruch 8, der dafür vorgesehen ist, zumindest teilweise durch ein steuerbares Instrument (2) betrieben zu werden, **dadurch gekennzeichnet, daß** der Montagerahmen eine Kopplungseinrichtung hat, die komplementär zu der Kopplungseinrichtung ist, die an dem steuerbaren Instrument (3) montiert ist, durch die das Instrument (3) und der Rahmen (2) miteinander in einer festen Position verbunden werden können, und in der das Rohr- und Kabelsystem einen gemeinsamen Verbindungspunkt haben, der komplementär zu einem gemeinsamen Verbindungspunkt an dem steuerbaren Instrument (3) ist.

10. Verfahren zum Montieren einer Vorrichtung nach einem der Ansprüche 1 bis 7 an einer Pipelinelänge, die auf dem Boden des Meeres liegt, unter Verwendung eines Montagerahmens (2) nach einem der Ansprüche 8 bis 9 und einem steuerbaren Instrument (3), **dadurch gekennzeichnet, daß** es die folgenden Schritte aufweist:
- Verbinden des Montagerahmens (2) mit der Vorrichtung (1) und Absenken des Aufbaus auf eine vorbestimmte Höhe in Bezug auf den Meeresboden,
- Verbinden des steuerbaren Instruments (3) mit dem Montagerahmen (2) bei einer vorbestimmten Höhe,
- Plazieren der Vorrichtung (1) über der Pipeline mit Hilfe des steuerbaren Instruments (3),
- Ineingrifftreten der Klemmglieder (20, 21) mit der Pipeline,
- komplettes oder teilweises Ablassen des flüssigen Mediums, das in dem Schwimmglied (4) vorhanden ist, mit Hilfe von Druckluft,
- Antreiben des Hydraulikzylinders (12) an dem Montagerahmen (2) und Bringen der flügeltragenden Struktur (26-32; 38-47) in die Betriebsposition,
- Entriegeln der Kopplung des Montagerahmens (2) mit der Vorrichtung (1) und
- Entkoppeln des steuerbaren Instrumentes (3) von dem Montagerahmen (2) an der vorbestimmten Höhe.

11. Verfahren zum Transport einer Pipelinelänge, die auf dem Meeresgrund liegt, mit einer Anzahl von Vorrichtungen nach einem der Ansprüche 1 bis 7, **dadurch gekennzeichnet, daß** es die folgenden Schritte aufweist:
- Absperren der Länge der Pipeline an ihren äußeren Enden und vollständiges oder teilweises Entleeren dieser,
- Anordnen der Vorrichtungen beabstandet zueinander mit vorbestimmten gegenseitigen Intervallen an der Pipeline und Einstellen der Vorrichtungen,
- Verbinden der Schleppschiffe mit zumindest den äußeren Enden der Längen der Pipeline und
- Arrangieren der Steuerung der Schleppschiffe.

12. Verfahren nach Anspruch 11, **dadurch gekennzeichnet, daß** für das Arrangieren der Steuerung der Schleppschiffe Signale erzeugt werden durch Signalglieder, die zumindest an jeder der Vorrichtungen montiert sind, wobei die Signale von zumindest den einzelnen Vorrichtungen die absolute Position oder die Position in Bezug auf einen bestimmten Punkt anzeigen, wobei die Signale von einer Signalverarbeitungseinheit, die von der Pipelinelänge beabstandet angeordnet ist, empfangen und verarbeitet werden, wobei die Signalverarbeitungseinheit in der Stadt angeordnet ist oder sich zusammen mit der Pipeline bewegt und die Signalverarbeitungseinheit die Steuersignale, die für die Schleppschiffe vorgesehen sind, aussendet.

## Revendications

1. Dispositif (1) pour exercer une force ascendante sur une canalisation submergée, ledit dispositif (1) ayant un ou plusieurs éléments d'accouplement (20, 21) par lesquels le dispositif (1) peut être accouplé à ladite canalisation, un flotteur (4) pour régler la flottabilité du dispositif (1), et une structure d'aile réglable (6), **caractérisé en ce que** le flotteur (4), constitué d'une ou plusieurs pièces, est un flotteur séparé (4), ladite structure d'aile (6) étant reliée au flotteur (4) et que ladite structure d'aile (6) comprend un châssis support d'aile (26 à 32 ; 38 à 47) sur lequel est fixée une toile d'aile (37), des moyens (12, 31 à 33, 44 à 47) ayant été prévus pour maintenir des parties de l'aile (6) dans une position de non-fonctionnement ou une position de fonctionnement.

2. Dispositif selon la revendication 1, **caractérisé en ce que** ledit flotteur (4) étant muni d'une entrée (7) et d'une sortie (8), prévues pour admettre un milieu d'une première densité et décharger un milieu d'une deuxième densité, respectivement, la densité dudit second milieu étant plus grande que la densité dudit premier milieu, et ledit deuxième milieu étant déplacé par ledit premier milieu.

3. Dispositif selon la revendication 1-2, **caractérisé en ce que** ledit châssis support d'aile (26 à 32) a un arbre central (26) monté de manière pivotante dans la direction longitudinale sur le dessus dudit flotteur (4), avec des bras oscillants (28, 29) attachés aux deux côtés près d'une extrémité extérieure de l'arbre central (26), dans lequel des bras d'extension (30, 31) consistant en une ou plusieurs pièces sont prévus pour amener les bras oscillants (28, 29) d'une position de non-fonctionnement à une position de fonctionnement et retour, lesdits bras (30, 31) étant en prise avec les bras oscillants (28, 29) à une extrémité extérieure et en prise avec un coulisseau (32) déplaçable à travers l'arbre central à l'autre extrémité extérieure, et des moyens de verrouillage étant prévus pour verrouiller les bras d'extension (30, 31) dans des positions prédéterminées sur l'arbre central (26).

4. Dispositif selon la revendication 1-2, **caractérisé en ce que** le châssis support d'aile (38 à 47) comprend un anneau (38) pouvant tourner autour du flotteur (4), une partie sensiblement en U (39) s'étendant longitudinalement à travers au moins une partie du flotteur (4) et ayant ses extrémités extérieures reliées à l'anneau rotatif (38) et ayant une connexion pivotante (40) avec le côté arrière dudit flotteur (4), des bras oscillants (41, 42) étant montés près des extrémités extérieures des branches de la partie en U, et dans lequel des bras d'extension (43, 44) constitués d'une ou plusieurs pièces ont été prévus pour amener les bras oscillants (41, 42) d'une position de non-fonctionnement à une position de fonctionnement et retour, lesdits bras d'extension (43, 44) en prise à une extrémité avec un coulisseau (45, 46) déplaçable en travers d'une branche de la partie en U (39), des moyens de verrouillage étant prévus pour verrouiller les bras d'extension (43,44) à des positions prédéterminées sur une branche de la partie en U (39).

5. Dispositif selon la revendication 4, **caractérisé en ce que** la partie en U (39) est reliée de manière pivotante à l'anneau rotatif (38), et que la connexion rotative (40) de la partie en U (39) peut être ajustée par rapport à l'arrière du flotteur (4) de telle façon que la partie en U (39) peut prendre diverses positions angulaires par rapport au plan dans lequel l'anneau rotatif (38) se situe.

6. Dispositif selon les revendications 1-5, **caractérisé en ce que** du côté inférieur le dispositif est muni d'un châssis support (5) relié à un ou plusieurs flotteurs (4) et dressé sur au moins deux jambes coulissantes parallèles (19), qui forment un angle aigu par rapport à l'arbre central (26) ou à la partie en U (39) du châssis support d'aile (26 à 32 ; 38 à 47), dans lequel ont été prévues en outre au moins deux éléments de serrage (20, 21) situés entre les jambes coulissantes (19) et espacées, leurs points d'application étant à la même hauteur par rapport aux jambes coulissantes (19).

7. Dispositif selon la revendication 6, **caractérisé en ce que** les éléments de serrage (20, 21) se composent de deux pièces identiques, des pièces élastiques en caoutchouc ou en matière plastique (23) étant montées à l'intérieur.

8. Châssis de montage (2) pour un dispositif selon une ou plusieurs des revendications 1-7, **caractérisé en ce que** le châssis (2) est muni d'au moins trois éléments d'accouplement (10), qui sont prévus pour coopérer avec des éléments d'accouplement complémentaires (9) sur le dispositif, une canalisation et/ou un système de câblage ayant au moins des points de connexion pour lesquels des points de connexion complémentaires ont été montés sur le dispositif, au moins un vérin hydraulique (12) ayant une extrémité prévue pour être en prise avec une ou des extrémités extérieures des bras d'extension (30, 31 ; 43, 44) et des moyens de verrouillage pour ceux-ci montés sur le dispositif.

9. Châssis de montage selon la revendication 8, qui est prévu pour être au moins en partie actionné par un instrument contrôlable (2), **caractérisé en ce que** le châssis de montage comporte des moyens d'accouplement complémentaires de moyens d'accouplement montés sur l'instrument contrôlable (3), par lesquels l'instrument (3) et le châssis (2) peuvent être accouplés l'un à l'autre dans une position fixe, et dans lequel la canalisation et le système de câbles on un point de connexion commun complémentaire d'un point de connexion commun sur l'instrument contrôlable (3).

10. Procédé de montage d'un dispositif selon les revendications 1-7 d'une longueur de canalisation reposant sur le fond de la mer, en utilisant un châssis de montage (2) selon la revendication 8-9 et un instrument contrôlable (3), **caractérisé en ce qu'**il comprend les étapes suivantes :
- accoupler le châssis de montage (2) et le dispositif (1) et descendre l'ensemble à une hauteur prédéterminée en relation avec le fond de la mer,
- accoupler l'instrument contrôlable (3) au châssis de montage (2) à une hauteur prédéterminée ;
- placer le dispositif (1) sur la canalisation à l'aide de l'instrument contrôlable (3) ;
- mettre les éléments de serrage (20, 21) en prise avec la canalisation ;
- déplacer complètement ou partiellement le milieu liquide présent dans le flotteur (4) au moyen d'air comprimé ;
- actionner le vérin hydraulique (12) sur le châssis de montage (2) et déplacer le châssis support d'aile (26 à 32 ; 38 à 47) dans la position de fonctionnement ;
- déverrouiller l'accouplement du châssis de montage (2) et du dispositif (1) ; et
- désaccoupler l'instrument contrôlable (3) du châssis de montage (2) à la hauteur prédéterminée.

11. Procédé de transport d'une longueur de canalisation située sur le fond de la mer par un nombre de dispositifs selon les revendications 1-7, **caractérisé en ce qu'**il comprend les étapes suivantes :
- obturer la longueur de canalisation à ses extrémités extérieures et la vider complètement ou partiellement ;
- espacer les dispositifs à des intervalles mutuels prédéterminés sur la canalisation et régler lesdits dispositifs ;
- accoupler les remorqueurs au moins aux extrémités extérieures de la longueur de canalisation ; et
- organiser la commande des remorqueurs.

12. Procédé selon la revendication 11, **caractérisé en ce que** pour organiser la commande des remorqueurs, des signaux sont produits par des éléments de signalisation montés au moins sur chacun des dispositifs, lesdits signaux indiquant la position absolue ou la position par rapport à un certain point au moins des dispositifs individuels, lesdits signaux étant reçus et traités par une unité de traitement de signaux située à une distance de la longueur de canalisation remorquée, ou se déplaçant avec elle, et l'unité de traitement de signaux envoie les signaux de commande prévus pour les remorqueurs.
